(19) Europäisches Patentamt
European Patent Office
Office européen des brevets

(11) Numéro de publication: **0 202 158**
**B1**

(12) # FASCICULE DE BREVET EUROPÉEN

(45) Date de publication du fascicule du brevet: **10.08.88**

(51) Int. Cl.[4]: **B 01 J 29/02**, C 10 G 49/02

(21) Numéro de dépôt: **86400967.5**

(22) Date de dépôt: **05.05.86**

(54) **Catalyseur d'hydrocraquage d'huile d'hydrocraquage doux de charges pétrolières lourdes pour produire des distillats moyens.**

(30) Priorité: **14.05.85 FR 8507474**

(43) Date de publication de la demande: **20.11.86 Bulletin 86/47**

(45) Mention de la délivrance du brevet: **10.08.88 Bulletin 88/32**

(84) Etats contractants désignés: **DE GB IT NL**

(56) Documents cité:
**EP-A-0 073 718**
**US-A-3 855 147**
**US-A-3 966 642**
**US-A-4 176 090**
**US-A-4 248 739**

(73) Titulaire: **INSTITUT FRANCAIS DU PETROLE, 4, Avenue de Bois- Préau, F-92502 Rueil- Malmaison (FR)**

(72) Inventeur: **Dufresne, Pierre, 67, rue Georges Sand, F-92500 Rueil- Malmaison (FR)**
Inventeur: **Marcilly, Christian, 91 ter rue Condocet, F-78800 Houilles (FR)**

**EP 0 202 158 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

La présente invention concerne un catalyseur d'hydroraffinage d'huiles ou d'hydrocraquage de fractions pétrolières lourdes en essence et surtout en distillats moyens, kérosène et gazole comprenant comme constituant de base au moins une argile pontée contenant du fluor dans sa formule chimique.

Plus précisément ce catalyseur comprend en mélange (a) une argile pontée, contenant du fluor dans sa formule chimique, appartenant au groupe des smectites (groupe de la montmorillonite) associée éventuellement à au moins une autre argile pontée par exemple du groupe des smectites, (b) une matrice amorphe contenant de l'alumine, (c) au moins un métal du groupe VIII de la classification périodique des éléments tel que par exemple le nickel, le cobalt, le palladium et le platine, et (d) éventuellement au moins un métal du groupe VI B de la classification périodique des éléments (Handbook of Chemistry and Physics 37ième édition 1956 pages 392-393) tel que par exemple le molybdène et le tungstène.

Les catalyseurs d'hydrocraquage sont, pour leur grande majorité, constitués d'une fonction hydrogénante déposée sur un support acide. La fonction hydrogénante est soit un métal noble tel que palladium ou platine, comme mentionné entre autre dans les brevets US-A-3 835 027, US-A-3 890 247 et US-A-4 120 825, soit une association de sulfures de métaux du groupe VIB (molybdène ou tungstène) et du groupe VIII (cobalt ou nickel) de la classification périodique des éléments, comme mentionné par exemple dans les brevets US-A-3 132 089 et US-A-3 159 568.

Le support acide est en général une alumine halogénée, une silice-alumine amorphe ou une zéolithe de type Y dans laquelle au moins 70 % du sodium initial a été en général remplacé par des protons ou des ions de métaux des terres rares. Les supports zéolithiques ne sont pas constitués de zéolithe pure mais contiennent en réalité entre 10 et 80 % de zéolithe mélangée à un support inerte ou moins actif tel que alumine ou silice-alumines.

Les catalyseurs zéolithiques sont généralement utilisés en hydrocraquage pour une production élevée d'essence (C. MARCILLY, J.P. FRANCK Catalysis by Zeolites. Edt by IMELIK and al., Elsevier Scientific Publish. Comp., Amsterdam, 1980, 93-104; Iranian Petroleum Institute, Bulletin 66, 1977, 17.). Leur sélectivité particulière est en effet mal adaptée à la fabrication de distillats moyens, tels que par exemple kérosène et gazole. La sélectivité en distillet moyen est bien meilleure avec des catalyseurs préparés à partir de supports amorphes du type silice-alumines beaucoup moins acides que les zéolithes.

Les silice-alumines mixtes les plus adaptées à une production élevée en distillats moyens sont celles situées dans le domaine de composition comprise entre 15 % et 60 % en poids de $SiO_2$ dans l'oxyde. (M. CHOUDHARY, e.a., Ind. Eng. Chem. P.R.D., vol. 14 (2), 1975, 74-83).

Récemment divers brevets ont fait état de l'utilisation, en hydrocraquage de coupes lourdes, d'argiles pontées associées à un métal catalytique des groupes I B à VIII de la classification périodique des éléments tels que par exemple un métal noble, du nickel, du cobalt, du tungstène ou du molybdène. La brevet US-A-4 176 090 décrit par exemple l'utilisation d'une argile pontée contenant par exemple du palladium pour l'hydrocraquage. Dans ce brevet aucune précision n'est donnée sur la coupe utilisée.

Le brevet US-A-4 248 739 décrit par exemple l'utilisation d'argiles pontées particulièrement utiles pour la préparation de catalyseurs contenant des métaux tel que le palladium, le platine, le cobalt, le molybdène, le nickel, le tungstène et les terres rares. Les catalyseurs obtenus sont en particulier utilisables dans les réactions de conversion d'hydrocarbures comme par exemple l'hydrocraquage. Cependant ce brevet ne donne aucune précision sur les coupes utilisées ni sur les performances obtenues.

Par ailleurs l'utilisation d'argiles fluorées, mais non pontées, dans diverses réactions de conversion d'hydrocarbures, en présence ou en l'absence d'hydrogène a été entre autre envisagée ou mentionnée dans la littérature: A.C.S. Vol. 18, 1973, Division of Petroleum Chemistry preprints meeting of Dallas, April 8-13 pages 33 à 51 Hattori H et al., et US-A-3 855 147.

De plus l'utilisation d'argiles fluorées dans lesquelles tout ou partie de l'aluminium en position octaédrique a été remplacé par du nickel ou du cobalt, dans des réactions d'hydrocraquage et d'hydroisomérisation a été mentionnée dans A.C.S. Vol. 20, 1975, Division of Petroleum Chemistry, preprints, meeting of Philadelphia, April 6-11, pages 522 à 534 et revendiquée dans le brevet US-A-3 966 642.

Toutes les argiles citées dans les références précedentes entrent dans la catégorie des smectites dont une description est donnée plus loin.

On a découvert dans la présente invention que l'utilisation d'une argile pontée et fluorée appartenant au groupe des smectites (groupe de la montmorillonite) permet d'obtenir des catalyseurs utilisables pour des opérations d'hydrocraquage doux visant à améliorer les propriétés de viscosité d'huiles lubrifiantes ou pour des opérations d'hydrocraquage doux de coupes pétrolières lourdes à basse pression totale (au plus égale à 10 Megapascals (MPa) ou encore pour des opérations d'hydrocraquage plus profond que précédemment, de coupes pétrolières lourdes, réalisées sous une pression généralement supérieure à 10 MPa visant à obtenir une sélectivité maximale en distillats moyens (kérosène et gazole). Les catalyseurs obtenus sont plus performants que les catalyseurs traditionnels à base de silice-alumines ou que les catalyseurs à base par exemple de smectites pontées non fluorées ou à base de smectite fluorée non pontée.

Certaines argiles possèdent une structure lamellaire à réseau expansible. Elles présentent la particularité d'adsorber divers solvants, notamment l'eau, entre les feuillets qui les composent, ce qui provoque un gonflement du solide par suite de l'affaiblissement des liaisons électrostatiques entre les feuillets. Ces argiles appartiennent essentiellement au groupe des smectites (ou encore groupe de la montmorillonite) et pour

certaines d'entre elles au groupe des vermiculites. Leur structure est composée de feuillets élementaires à trois couches: deux couches simples de tétraèdres $SiO_4$ dans lesquelles une partie du silicium peut être remplacée par d'autres cations en position tétraédrique tels que $Al^{3+}$ ou éventuellement $Fe^{3+}$, et entre ces deux couches de tétraèdres, une couche d'octaèdres d'oxygène au centre desquels se situent des cations métalliques tels que par exemple $Al^{3+}$, $Fe^{3+}$, $Mg^{2+}$. Cette couche octaédrique est constituée d'un empilement compact d'oxygènes provenant soit des sommets des tétraèdres précédents soit de groupes hydroxyles OH. Le réseau hexagonal compact de ces oxygènes contient six cavités octaédriques. Lorsque les cations métalliques occupent quatre de ces cavités (deux cavités sur trois comme par exemple dans le cas de l'aluminium), la couche est dite dioctaédrique; lorsqu'ils occupent toutes les cavités (comme dans le cas du magnésium par exemple), trois cavités sur trois, la couche est dite trioctaédrique.

Les feuillets élémentaires de ces argiles sont porteurs de charges négatives qui sont compensées par la présence de cations échangeables, alcalins tels que par exemple $Li^+$, $Na^+$, $K^+$, alcalino-terreux tels que par exemple $Mg^{2+}$, $Ca^{2+}$, et éventuellement l'ion hydronium $H_3O^+$. Les smectites ont des densités de charges sur les feuillets inférieures à celles des argiles du type vermiculite: environ 0,66 charge par maille élémentaire contre environ 1 à 1,4 charge par maille élémentaire pour les argiles de type vermiculite. Les cations de compensation sont essentiellement le sodium et le calcium dans les smectites, le magnésium et le calcium dans les vermiculites. Du point de vue des densités de charges, smectites et vermiculites sont intermédiaires entre le talc et le pyrophyllite d'une part, dont les feuillets sont neutres et les micas d'autre part, caractérisés par une densité de charge importante sur les feuillets (environ 2 par maille élémentaire) compensée généralement par des ions $K^+$.

Les cations interfoliaires des smectites et des vermiculites peuvent être assez facilement remplacés par échange ionique par d'autres cations tels, par exemple, des ions ammonium ou des ions de métaux alcalino-terreux ou de métaux de terres rares.

Les propriétés de gonflement des argiles dépendent de divers facteurs dont la densité de charge et la nature du cation de compensation. Ainsi les smectites dont la densité de charge est plus faible que celle des vermiculites présentent des propriétés gonflantes nettement supérieures à celles de ces dernières, et constituent donc une classe très intéressante de solides. La distance répétitive ou espacement basal est la distance la plus courte séparant deux motifs cristallographiquement identiques situés dans deux feuillets adjacents.

Parmi les silicates phylliteux "gonflants" du type smectite on peut citer les principaux solides suivants de formule générale:

$$(M1^{n+})_{x/n} (M2)_2^{VI} (M3)_4^{IV} O_{10}(OH)_2$$

où M1 est le cation interfoliaire
M2 est le métal en position octaédrique
M3 est le métal en position tétraédrique,

. Les smectites dioctaédriques:

| | |
|---|---|
| montmorillonite | $(H, Na, Ca_{1/2})_x (Mg_xAl_{2-x})^{VI}Si_4^{IV}O_{10}(OH)_2$ |
| beidellite | $(H, Na, Ca_{1/2})_x Al_2^{VI}(Al_xSi_{4-x})^{IV}O_{10}(OH)_2$ |
| nontrolite | $(H, Na, Ca_{1/2}...)_x(Fe,Al)_2^{VI}(Al_xSi_{4-x})^{IV}O_{10}(OH)_2$ |

. Les smectites trioctaédriques:

| | |
|---|---|
| hectorite | $Na_x(Li_xMg_{3-x})^{VI}Si_4^{IV}O_{10}(OH)_2$ |
| Saponite | $Na_xMg_3^{VI}(Al_xSi_{4-x})^{IV}O_{10}(OH)_2$ |
| Stevensite | $Na_{2x}Mg^{VI}{}_{3-x})Si_4^{IV}O_{10}(OH)_2$. |

Une partie des OH située sur certains sommets des octaèdres peut être remplacée par les atomes de fluor, comme le décrivent Hattori H et al cité supra. Le fluor à l'intérieur de la structure est très stable puisqu'il n'est éliminable qu'à haute température (supérieure à environ 750°C) en présence de vapeur d'eau.

Après adsorption à saturation d'eau ou d'un solvant polaire organique dans une smectite, l'espacement interfoliaire (entre deux feuillets) est maximal. Il peut atteindre une valeur voisine de 1 nanomètre (nm). Ces solides sont potentiellement intéressants en catalyse car leur surface spécifique et leur acidité potentielles sont élevées. Les smectites ont malheureusement l'inconvénient de perdre leur caractère expansé par chauffage à 100°C et, de ce fait, de ne pas conserver l'augmentation de surface spécifique résultant de leur expansion.

Différentes méthodes ont été décrites dans l'art antérieur pour introduire, entre les feuillets des smectites, des piliers ou ponts pour obtenir des smectites pontées qui conservent un espacement interfoliaire élevé après avoir été soumises à un traitement thermique.

La méthode consistant à introduire des ponts constitués par des oligomères d'un hydroxyde d'un métal, notamment d'hydroxyde d'aluminium, a été décrite par LAHAV, SHANI et SHABTAI dans Clays and Clays Mineral, vol. 26 (n° 2), p. 107-115 (1978) et dans la demande de brevet français FR-A-2 394 324. Leur préparation et leur utilisation en craquage catalytique est également décrite dans le brevet US-A-4 238 364. La formation de ponts constitués d'oligomères d'hydroxydes d'aluminium et de magnésium, d'hydroxydes de zirconium,

d'hydroxydes mixtes de silicium et de bore, est décrite dans le brevet US-A-4 248 739. Une technique, par dialyse, de pontage des smectites à l'aide par exemple d'hydroxydes d'aluminium de chrome, de zirconium et titane est revendiquée dans la demande de brevet Européen EP-A-73 718. D'autres méthodes de pontage d'argiles sont citées par exemple dans le brevet US-A-4 248 739, colonne 3, lignes 1 à 52.

Ces méthodes consistent dans leur principe à mettre l'argile au contact avec une solution contenant des espèces ioniques plus ou moins oligomérisées du type hydroxy-aluminique (dans le cas de l'aluminium). Cette opération est réalisée le plus souvent en solution peu concentrée, à température inférieure à 100°C et si possible en l'absence de trouble dû à un début de précipitation de l'hydroxyde. Les concentrations de l'ion métallique et de l'argile doivent être optimisées pour qu'il y ait formation de suffisamment de piliers solides et que la porosité de l'argile ne soit pas fortement diminuée par l'insertion d'une trop grande quantité d'oxyde métallique.

Lorsque les ions interfoliaires alcalins ou alcalino-terreux sont remplacés par des protons soit directement à l'aide d'une solution aqueuse très diluée d'un acide, soit de préférence par échange avec un sel d'ammonium suivi d'une calcination entre 300 et 700°C, les smectites pontées acquièrent une acidité forte quoique inférieure globalement à celles des zéolithes classiques de type Y ou mordénite par exemple. Cette acidité peut être utilisée avec profit dans des opérations de craquage de molécules lourdes en présence d'hydrogène.

Dans la présente invention, la smectite pontée fluorée acide obtenue selon les techniques précédentes est caractérisable notamment par sa densité de charge, sa surface spécifique, la valeur de son espacement basal et sa teneur en fluor. Les smectites pontées particulièrement souhaitables pour les catalyseurs d'hydroconversion de la présente invention sont celles dont les valeurs des quatre caractéristiques mentionnées ci-dessus sont comprises à l'intérieur des fourchettes respectives suivantes:

densité de charge: 0,6 à 1,8 milliéquivalent/gramme (meq x $g^{-1}$)
surface spécifique: 200 à 600 $m^2xg^{-1}$
espacement basal: 1,6 à 2,0 nm
teneur en fluor 0,01 à 4 % en poids de fluor et de préférence 0,1 à 3 % en poids.

La smectite pontée fluorée ainsi définie est incorporée dans une matrice amorphe à base d'alumine. Plus précisémment, cette matrice est constituée d'alumine éventuellement associée à l'un au moins des oxydes suivants: oxyde de bore, magnésie, silice, oxyde de titane, oxyde de chrome, zircone. Cette smectite pontée fluorée peut être mélangée aussi à une smectite pontée non fluorée avant son incorporation dans une matière amorphe.

La smectite pontée fluorée peut être avantageusement préparée au cours de l'opération d'incorporation de la smectite originelle à la matrice à base d'alumine. La technique la plus simple d'incorporation consiste à malaxer la smectite humide au gel humide (préalablement peptisé par addition d'un acide) des oxydes constituant la matrice.

Il est probable que les oligomères ioniques hydroxy-aluminiques libérés au moment de la peptisation du gel migrent et s'intercalent en cours de malaxage dans les feuillets de la smectite.

Les catalyseurs de la présente invention comprennent:

(a) un support contenant au moins 20 % en poids d'une argile pontée fluorée appartenant au groupe des smectites

(b) une matrice amorphe, contenant au moins 10 % en poids et de préférence au moins 30 % en poids d'alumine

(c) une fonction hydrogénante contenant au moins un métal ou un composé de métal choisi parmi les métaux du groupe VIII de la classification périodique des éléments ou une combinaison comprenant un métal ou un composé de métal choisi parmi les métaux du groupe VI B et au moins un métal ou un composé de métal choisi parmi les métaux non nobles du groupe VIII, le support représentant une quantité suffisante pour que la teneur en smectite pontée fluorée soit d'au moins 12 % en poids par rapport au poids du catalyseur fini; la teneur globale en métaux calculée en oxyde(s) de ce ou ces métaux représentant de 0,01 à 20 % en poids dans le cas de métaux non nobles du groupe VIII et de 0,01 à 5 % dans le cas de métaux nobles du groupe VIII et la teneur globale en métaux exprimée en oxyde(s) de ce ou ces métaux représentant de 5 à 40 % en poids dans le cas d'une combinaison d'au moins un métal ou un composé (oxyde notamment) de métal du groupe VI B avec au moins un métal ou un composé de métal d'un métal non noble du groupe VIII (oxyde de cobalt ou de nickel notamment), le complément étant constitué par la matrice amorphe.

On utilise avantageusement une matrice amorphe silice-alumine contenant au moins 40 % en poids d'alumine.

Lorsque le support est formé par un mélange d'une smectite pontée fluorée avec une argile pontée non fluorée, il est avantageux d'utiliser des mélanges contenant de 5 à 50 % en poids d'argile pontée non fluorée, ladite argile pontée non fluorée appartenant avantageusement au groupe des smectites.

La fonction hydrogénante est avantageusement choisie dans le groupe formé par les métaux nobles du groupe VIII et par les associations comprenant au moins un oxyde d'un métal du groupe VI B et au moins un oxyde d'un métal non noble du groupe VIII.

La fonction hydrogénante peut être introduite dans le catalyseur à divers niveaux de la préparation et de diverses manières.

Elle peut être introduite en partie seulement (cas des associations d'oxydes de métaux des groupes VI B et VIII) ou en totalité au moment du malaxage de la smectite avec le gel d'oxyde choisi comme matrice. Elle peut

être introduite par une ou plusieurs opérations d'échange ionique sur le support calciné constitué de la smectite dispersée dans la matrice choisie, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des grpupes VIII (Co et/ou Ni notamment) lorsque les précurseurs des oxydes des métaux du groupe VI B (Mo et/ou W) ont été préalablement introduits au moment du malaxage du support. Elle peut enfin être introduite par une ou plusieurs opérations d'imprégnation du support calciné constitué de la smectite et de la matrice, par des solutions contenant les précurseurs des oxydes de métaux des groupes VI B et/ou VIII, les précurseurs des oxydes des métaux des groupe VIII étant de préférence introduits après ceux du groupe VI B ou en même temps que ces derniers. Les principaux sels précurseurs qui peuvent être utilisés sont par exemple:

pour le groupé VIII (cobalt ou nickel): nitrate, acétate, sulfate des cations bivalents hydratés ou des cations hexammines $Co(NH_3)_6^{2+}$ et $Ni(NH_3)_6^{2+}$

pour le groupe VI B (Mo ou W): les divers molybdates ou tungtates d'ammonium connus.

Dans le cas où les oxydes des métaux sont introduits en plusieurs imprégnations des sels précurseurs correspondants, une étape de calcination intermédiaire du catalyseur devra être effectuée à une température comprise entre 250 et 600°C.

L'imprégnation du molybdène peut être facilitée par ajout d'acide phosphorique dans les solutions de paramolybdate d'ammonium.

Les concentrations des composés métalliques exprimées en poids d'oxyde(s) sont les suivantes: 0,01 à 5 % poids d'oxyde(s) de métaux du groupe VIII, et de préférence de 0,03 à 3 % poids dans le cas où il s'agit uniquement de métaux nobles du groupe VIII tels que par exemple le palladium ou le platine, 0,01 à 20 % poids d'oxyde(s) de métaux du groupe VIII et de préférence de 0,05 à 15 %, dans le cas où il s'agit de métaux non nobles du groupe VIII tels que par exemple le nickel ou le cobalt. Lorsqu'on utilise à la fois au moins un métal ou composé de métal du groupe VIII et au moins un composé d'un métal du groupe VI B, on emploie environ 5 à 40 % en poids exprimée en poids d'oxyde(s) d'une combinaison d'au moins un composé (oxyde notamment) d'un métal du groupe VI B (molybdène ou tungstène notamment) et d'au moins un métal ou composé de métal du groupe VIII (cobalt ou nickel notamment) et de préférence 10 à 30 % avec un rapport pondéral (exprimé en oxydes métalliques) métaux du groupe VIII sur métaux du groupe VI B avantageusement de 0,05 à 0,8 et de préférence de 0,10 à 0,50. Les couples de métaux que l'on peut avantageusement employer sont Ni+Mo; Co+Mo; Ni+W; Co+W.

Les catalyseurs ainsi obtenus peuvent être avantageusement utilisés pour des opérations d'hydroraffinage d'huile visant à améliorer les propriétés de viscosité des huiles destinées à la lubrification des moteurs et dont le point initial d'ébullition est supérieur à 400°C, dans des conditions de température, de pression totale, de vitesse spatiale d'alimentation (VVH) et de rapport hydrogène/hydrocarbures ($H_2$/HC) suivantes:

| | |
|---|---|
| Température | : 300 à 500°C environ. |
| Pression | : 35 à 200 bars environ (3,5 à 20 MPa). |
| VVH | : 0,2 à 2 litres de charge par litre de catalyseur et par heure environ. |
| $H_2$/HC | : de 250 à 1500 litres par litre environ. |

Ces catalyseurs sont cependant préférés pour l'hydrocraquage de coupes lourdes, où ils présentent une activité améliorée par rapport à ceux de l'art antérieur, et ont de plus une sélectivité améliorée pour la production le distillats moyens de très bonne qualité.

Les charges employées dans ce procédé sont des gazoles, des gazoles sous vide, des résidus désasphaltés ou hydrotraités ou équivalents. Elles sont constituées au moins à 80 % en volume de composés dont les points d'ébullition sont situés entre 350 et 580°C. Elles contiennent des hétéroatomes tels que soufre et azote. Les conditions de l'hydrocraquage telles que, température, pression, taux de recyclage d'hydrogène, vitesse volumique horaire, devront être adaptées à la nature de la charge, caractérisée notamment par la gamme des points d'ébullition, la teneur en aromatiques ou polyaromatiques, la teneur en hétéroatomes. Les teneurs en azote sont comprises généralement entre 5 et 2000 ppm, et les teneurs en soufre entre 50 et 30.000 ppm.

Ces catalyseurs sont particulièrement préférés aux catalyseurs classiques lorsqu'il s'agit de convertir légèrement des charges lourdes (P.I. supérieur ou égal à 350°C) tout en les déazotant et en les désulfurants. Les taux de conversion obtenus sont situés entre 15 et 50 % exprimés en rendement de produits de points d'ébullition inférieurs à 350°C. Dans ces conditions, le réacteur contient deux catalyseurs, le premier d'hydrotraitement classique dont le but est d'assurer la plus grosse partie de la déazotation et de la désulfuration, le second d'hydrocraquage qui est chargé d'assurer la plus grosse partie de la conversion en produits plus légers que 350°C. Le rôle de second catalyseur d'hydrocraquage peut être parfaitement assuré par l'un des catalyseurs préparés selon la présente invention. Les conditions dans lesquelles travaille ce second catalyseur sont situées à l'intérieur des fourchettes suivantes:

| | |
|---|---|
| Température | : 360 à 450°C environ |
| Pression totale | : 35 à 90 bars environ (3,5 à 9 MPa) |
| VVH | : 0,3 à 1,5 environ |
| $H_2$/HC | : 250 à 1000 l/l environ. |

Dans les exemples suivants, la fonction hydrogénante est constituée par une association $MoO_3$-NiO en quantités respectives de 14 % en poids et 3 % en poids exprimés par rapport au poids du catalyseur fini.

L'activité du catalyseur est comparée à l'aide des tests suivants:

- tests (MM) sur molécules modèles = dans le test $MM_1$ la charge est constituée par un mélange contenant 79,6 % en poids de cyclohexane, 19,9 % en poids de toluène et 0,5 % de thiophène, dans le test $MM_2$ la charge est constituée par un mélange contenant 79,2 % en poids de cyclohexane, 19,8 % en poids de toluène, 0,5 % en poids de n-hexylamine et 0,5 % de thiophène.

Le catalyseur de la présente invention constitue la totalité du lit catalytique présent dans le réacteur.

- tests GL sur une charge constituée par un gazole lourd dont les caractéristiques sont données dans le tableau 1 ci-dessous. Les tests GL sont effectués à trois pressions différentes; ces tests sont dénommés $GL_1$, $GL_2$, $GL_3$.

Le catalyseur de la présente invention est placé en seconde partie du lit catalytique présent dans le réacteur, la première partie étant occupée par un catalyseur industriel classique d'hydrotraitement HR 306 commercialisé par la Société PROCATALYSE et constitué d'une association d'oxydes de cobalt et de molybdène déposée sur une alumine. Les quantités des deux catalyseurs placés dans le réacteur sont identiques en volume.

**Tableau 1**

**Caractéristiques de la charge = gazole lourd - Aramco 400**

| | | |
|---|---|---|
| DISTILLATION: | Pt initial | 361 |
| (C°) | 10 % | 443 |
| | 30 % | 477 |
| | 50 % | 497 |
| | 70 % | 515 |
| | 90 % | 535 |
| | 100 % | 568 |
| Soufre % poids | | 2,7 |
| Azote % poids | | 0,119 |
| Densité $d_4^{20}$ | 20° C | 0,927 |
| Indice de réfraction | 70° C | 1,5017 |
| Viscosité | 50° C | 79,0 cSt (79x10$^{-6}$m$^2$/sec) |
| | 100° C | 12,06 cSt (12,06x10$^{-6}$m$^2$/sec) |
| Point d'écoulement | ° C | + 48 |
| Point d'aniline | 0° C | + 85,8 |

Avant chaque test, les catalyseurs sont soumis à une sulfuration préalable de 8 heures, avec la charge utilisée pour le test, dans les conditions suivantes:

- injection de la charge soufrée ou du gazole et de l'hydrogène dès 150° C, palier de 1 heure à cette température,
- montée progressive en température de 150° C à 220° C en 1 heure puis palier de 1 heures à 220° C,
- montée progressive en température de 220° C à 300° C en 1 heure puis palier de 4 heures à 300° C.

Les catalyseurs ayant subi cette sulfuration sont alors testés dans les conditions opératoires suivantes:

1) pour les tests MM:

P = 6,0 MPa (60 bars)
VVH = 2
$H_2/H_C$ = 500 l/l

Température: pour le test $MM_1$ (sans hexylamine: 350° C)
pour le test $MM_2$ (avec hexylamine: 400° C)

2) pour les tests GL:

T = 400° C
VVH = 1
P = 10 MPa $H_2$/HC = 800 l/l pour le test $GL_1$
P = 7 MPa $H_2$/HC = 550 l/l pour le test $GL_2$
P = 4 MPa $H_2$/HC = 300 l/l pour le test $GL_3$.

Les exemples 1 à 5 suivants décrivent la préparation des catalyseurs A à E. Les catalyseurs G et E sont des catalyseurs de comparaison.

**Exemple 1**: Préparation d'une smectite pontée fluorée et du catalyseur d'hydrocraquage correspondant

conforme à l'invention.

114 g d'une montmorillonite synthétique fluorée commercialisée par la société BAROID division NL Industrie (HOUSTON-TEXAS) sous le nom SMM mica-montmorillonite et dont les principales caractéristiques sont présentées dans le tableau 1, sont plongés dans 2,5 litres d'eau distillée pendant 24 heures.

**Tableau 1**

**Caractéristiques de la mica-montmorillonite SMM**

Formule chimique théorique: $(NH_4^+)_x [(Al_4)^{Octa}Si_{8-x}Al_x)^{tetra}O_{20}(OH,F)_4]^{(x)-}$
x = 1,4 environ
Composition (% poids): $SiO_2$ = 48 $Al_2O_3$ = 37
$NH_3$ = 2,6 F = 1,6 $H_2O$ = 12
S = 110-160 $m^2g^{-1}$
Capacité d'échange ionique = 1,5-1,6 $meq.g^{-1}$
Produit en microsphères de 20 à 80 micromètres ($\mu m$)

Parallèlement une solution 0,2 M en $AlCl_3$ est neutralisée par addition d'ammoniaque diluée jusqu'à pH 4 et vieillie pendant 24 heures. 1,5 litre de cette dernière solution est ajoutée à la suspension précédente de mica montmorillonite SMM et le mélange est agité vigoureusement pendant 24 heures. Le solide obtenu est lavé et centrifugé. Son espacement basal est de 1,82 nm après séchage à 120° C.

Une quantité équivalente à 100 g d'alumine $Al_2O_3$, disponible sous forme de pseudo-boehmite obtenue par hydrolyse d'un alcoolate d'aluminium et commercialisée par la Société CONDEA sous l'appelation PURAL, est progressivement humidifiée et peptisée par addition lente d'une solution aqueuse d'acide nitrique jusqu'à obtention d'une pâte très visqueuse qui est maintenue en agitation par malaxage pendant 20 minutes. On ajoute à cette pâte, l'argile pontée précédente et on poursuit le malaxage pendant 30 minutes supplémentaires. Le produit obtenu est extrudé sous forme de batonnets de 1,2 mm de diamètre, séché 4 heures à 120° C puis calciné 2 heures à 500° C.

100 g du produit ainsi obtenu sont imprégnés sans excès de solution par 77 $cm^3$ d'une solution d'heptamolybdate d'ammonium contenant une quantité de molybdène équivalente à 17,6 g de $MoO_3$, séché à 150° C et calciné 2 heures à 300° C. Il est de nouveau imprégné sans excès de solution par 66 $cm^3$ d'une solution de nitrate de nickel contenant une quantité de nickel équivalente à 3,8 g de NiO. Le solide humide est séché à 150° C puis calciné 3 heures à 520° C.

Le catalyseur ainsi obtenu, appelé catalyseur A présente les caractéristiques suivantes:

Support = 41,5 % en poids (le support étant constitué de 100 % de smectite pontée fluorée)
Matrice = 41,5 % en poids ($Al_2O_3$)
S = 262 $m^2.g^{-1}$
Volume poreux total VPT = 0,65 $cm^3.g^{-1}$
$MoO_3$ = 14 % en poids
NiO = 3 % en poids.

**Exemple 2**: Préparation d'une smectite pontée fluorée et du catalyseur d'hydrocraquage correspondant conforme à l'invention.

114 g de la même montmorillonite synthétique que celle de l'exemple 1 est intimement mélangée à une quantité de PURAL équivalente à 100 g d'$Al_2O_3$. Tout en le malaxant, on ajoute à ce mélange une solution diluée d'acide nitrique jusqu'à obtention d'une pâte très visqueuse. On ajoute encore une petite quantité d'eau distillée juste nécessaire (de l'ordre de 10 à 20 $cm^3$ environ) pour diminuer nettement la viscosité de la pâte sans toutefois aller jusqu'à un état de suspension pâteuse où il se produirait au repos une séparation nette entre le solide et la solution. On poursuit le malaxage pendant 5 heures à température ambiante tout en maintenant l'état de viscosité de la pâte par des ajouts progressifs d'eau distillée.

On poursuit encore le malaxage pendant 2 heures tout en séchant légèrement pour obtenir une viscosité adaptée à l'étape d'extrusion qui suit. Cette extrusion permet d'obtenir des batonnets de 1,2 mm de diamètre.

Le mélange ainsi obtenu est séché pendant 4 heures à 120° C, puis calciné 2 heures à 500° C.

Sur 100 g de ce mélange constitué de smectite pontée fluorée et d'alumine on réalise l'imprégnation successive d'heptamolybdate d'ammonium et de nitrate de nickel selon une technique identique à celle déjà décrite dans l'exemple 1.

On obtient le catalyseur B qui présente les caractéristiques suivantes:

Support = 41,5 % en poids (le support étant constitué de 100 % de smectite pontée fluorée)
Matrice = 41,5 % en poids ($Al_2O_3$)
S = 250 $m^2.g^{-1}$

VPT = 0,58 $cm^3.g^{-1}$
$MoO_3$ = 14 % en poids
NiO = 3 % en poids.

**Exemple 3 (comparatif)**: Préparation d'une smectite pontée non fluorée et du catalyseur d'hydrocraquage correspondant.

Une quantité équivalente à 100 g de produit anhydre, de bentonite du Wyoming commercialisée par la société CECA (11 avenue Morane-Saulmier, 78140 VELIZY-VILLACOUBLAY-FRANCE) et constituée essentiellement d'une argile du type montmorillonite non fluorée, est soumise à un traitement en suspension aqueuse identique à celui de l'exemple 1. L'argile pontée obtenu a un espacement basal de 1,86 nm, après séchage à 120° C.

Comme dans l'exemple 1, cette argile est malaxée avec de l'alumine PURAL, extrudée, séchée, calcinée puis imprégnée successivement par une solution d'un sel de molybdène puis par une solution d'un sel de nickel.

Après séchage à 150° C et calcination à 520° C pendant 3 heures, le catalyseur final appelé catalyseur C présente les caractéristiques suivantes:

Support = 41,5 % en poids (le support étant constitué de 100 % de smectite pontée non fluorée)
Matrice = 41,5 % en poids ($Al_2O_3$)
S = 265 $m^2.g^{-1}$
VPT = 0,69 $cm^3.g^{-1}$
$MoO_3$ = 14 % en poids
NiO = 3 % en poids.

**Exemple 4**: Préparation d'un mélange de smectites pontées et du catalyseur d'hydrocraquage correspondant.

On mélange des quantités équivalentes en produit anhydre de mica-montmorillonite synthétique fluorée SMM et de bentonite du Wyoming et on prépare à partir de ce mélange dans des conditions similaires à celles de l'exemple 1, un catalyseur D d'hydrocraquage dont les caractéristiques sont les suivantes:

Support = 41,5 % en poids (le support étant constitué de 50 % en poids de smectite pontée fluorée et de 50 % en poids de smectite pontée non fluorée)
Matrice = 41,5 % en poids ($Al_2O_3$)
Smectite pontée fluorée par rapport au catalyseur fini = 20,75 % en poids
S = 270 $m^2.g^{-1}$
VPT = 0,66 $cm^3.g^{-1}$
$MoO_3$ = 14 % en poids
NiO = 3 % en poids.

**Exemple 5** (comparatif) préparation d'une smectite fluorée non pontée et du catalyseur d'hydrocraquage correspondant.

114 g de la même montmorillonite synthétique que celle de l'exemple 1 est humidifiée par addition d'eau distillée jusqu'à obtention d'une pâte très visqueuse.

A une quantité de PURAL équivalent à 100 g d'alumine on ajoute une solution diluée d'acide nitrique jusqu'à obtention d'une pâte très visqueuse. On malaxe pendant 20 minutes tout en ajoutant progressivement de très petites quantités d'eau juste pour maintenir la viscosité constante.

On mélange les deux pâtes obtenues en les malaxant pendant une vingtaine de minutes, puis on extrude le mélange sous forme de batonnets de 1,2 mm de diamètre.

Le produit ainsi obtenu est séché pendant 4 heures à 120° C, puis calciné 2 heures à 500° C.

Sur 100 g de ce produit constitué du mélange de smectite fluorée non pontée et d'alumine on réalise l'imprégnation d'heptamolybdate d'ammonium et de nitrate de nickel selon la technique décrite dans l'exemple 1.

On obtient le catalyseur F qui présente les caractéristiques suivantes:

Support = 41,5 % en poids (le support étant constitué de 100 % de smectite fluorée non pontée)
Matrice = 41,5 % en poids ($Al_2O_3$)
$MoO_3$ = 14 % en poids
NiO = 3 % en poids
S = 140 $m^2.g^{-1}$
Volume poreux total VPT = 0,27 $cm^3.g^{-1}$

**Exemple 6** (comparatif: Préparation d'une silice-alumine par coprécipitation et du catalyseur contenant 3 % en poids de NiO et 14 % en poids de $MoO_3$ correspondant (catalyseur non conforme à l'invention).

Une silice-alumine contenant 25 % en poids de $SiO_2$ et 75 % en poids de $Al_2O_3$ est préparée par coprécipitation à pH 8 à partir de solutions de silicate de sodium d'une part, de nitrate d'aluminium d'autre part. Après quatre lavages à l'eau distillée et quatre lavages successifs dans une solution diluée de nitrate d'ammonium, la teneur en $Na_2O$ mesurée sur le produit sec est de 0,05 % en poids. Le support humide est alors séché lentement à 80°C jusqu'à obtention du degré d'humidité désiré pour sa mise en forme par extrusion. Celle-ci est réalisée en faisant passer le gel à travers une filière choisie pour obtenir des extrudés de 1 mm de diamètre.

Les extrudés sont séchés à 150°C puis calcinés 3 heures à 550°C. Ils présentent les caractéristiques suivantes:

S = 380 $m^2.g^{-1}$
VPT = 0,602 $cm^3.g^{-1}$

Le support ainsi obtenu est imprégné successivement par des solutions d'heptamolybdate d'ammonium et de nitrate de nickel selon une technique identique à celle décrite dans l'exemple 1. Ce catalyseur est appelé catalyseur E.

Il présente les caractéristiques suivantes:

Support = 87 % en poids (dont 21,75 % en poids de $SiO_2$ et 65,25 % en poids d'alumine)
S = 347 $m^2.g^{-1}$
VPT = 0,513 $cm^3.g^{-1}$
$MoO_3$ = 14 % en poids
NiO = 3 % en poids.

**Exemple 7**: Performance des catalyseurs A à F dans les tests MM sur molécules modèles (toluène et cyclohexane).

Le tableau 2 présente et compare les performances des divers catalyseurs mesurées tout d'abord à 350°C sur la charge ne contenant pas de n-hexylamine (test $MM_1$) puis à 400°C sur la charge contenant 0,5 % en poids de n-hexylamine (test $MM_2$), après 20 heures de fonctionnement dans chacune de ces conditions. Les performances sont exprimées par la valeur du taux "H"d'hydrogénation du toluène en méthylcyclohexane et du taux "I"d'isomérisation du cyclohexane en méthylcyclopentane.

**Tableau 2**

| CATALYSEURS | | A | B | C | D | E | F |
|---|---|---|---|---|---|---|---|
| Support + matrice Rapport pondéral | | Smectite pontée fluorée + $Al_2O_3$ 50/50 | Smectite pontée fluorée + $Al_2O_3$ 50/50 | Smectite pontée non fluorée+$Al_2O_3$ 50/50 | Mélange* de smectites fluorées et non fluorées + $Al_2O_3$ 50/50 | Support seul $SiO_2$-$Al_2O_3$ 25/75 | Smectite fluorée non pontée + $Al_2O_3$ 50/50 |
| TEST MM1 à 350°C | H | 42 | 41 | 41 | 41,5 | 43 | 41 |
| | I | 8,5 | 8,1 | 7,1 | 7,9 | 7,2 | 2,1 |
| TEST MM2 à 400°C | H | 29 | 30 | 29,5 | 29,5 | 32 | 28,8 |
| | I | 7,5 | 7,3 | 6,1 | 6,8 | 6,0 | 2,0 |

* 50% de smectite pontée fluorée + 50% smectite pontée non fluorée

Ces résultats montrent qu'en présence de molécules modèles de faible masse moléculaire (cyclohexane et toluène), les catalyseurs A, B et D de la présente invention ne sont pas nettement supérieurs aux catalyseurs de comparaison C et E, tant du point de vue de l'activité hydrogénante que de celui de l'activité isomérisante; ils ne sont pas nettement supérieurs au catalyseur F pour ce qui est de l'activité hydrogénante, mais présentent une meilleure activité isomérisante que le catalyseur F.

**Exemple 8**: Performances des catalyseurs A à F dans le test GL sur gazole lourd.

Le tableau 3 présente et compare les performances des divers catalyseurs, mesurées à 400°C aux trois pressions totales suivantes: 10, 7 et 4 MPa, après 72 heures de fonctionnement dans chaque condition. Ces performances sont exprimées par la conversion totale "CT" en produits bouillants au-dessous de 380°C et par le rendement "RG" en gazole 160-380°C.

**Tableau 3**

| CATALYSEURS | | A | B | C | D | E | F |
|---|---|---|---|---|---|---|---|
| Support + matrice Rapport pondéral | | Smectite/fluorée pontée + $Al_2O_3$ 50/50 | Smectite/fluorée pontée + $Al_2O_3$ 50/50 | Smectite/ pontée non fluorée + $Al_2O_3$ 50/50 | Mélange des smectites A et C + $Al_2O_3$ 50/50 | Support seul $SiO_2$-$Al_2O_3$ 25/75 | Smectite fluorée non pontée + $Al_2O_3$ 50/50 |
| 10 MPa | CT | 43,1 | 41,2 | 37,5 | 41,5 | 33,8 | 18,5 |
| | RG | 37,2 | 35,7 | 31,9 | 35,8 | 28,2 | 13,1 |
| 7 MPa | CT | 39,3 | 36,9 | 33,1 | 37,7 | 31,5 | 15,9 |
| | RG | 33,7 | 31,1 | 27,2 | 32,2 | 25,8 | 11,2 |
| 4 MPa | CT | 34,5 | 32,0 | 28,5 | 33,3 | 27,1 | 11,1 |
| | RG | 28,5 | 26,8 | 23,2 | 27,4 | 22 | 8,0 |

Ces résultats montrent l'avantage des catalyseurs A, B et D selon la présente invention par rapport aux catalyseurs de référence C, E et F pour hydroconvertir une charge lourde. Ils montrent également que le melange de deux smectites pontées, l'une fluoree, l'autre non fluorée (catalyseur D) est non seulement plus performant que la seule smectite pontée non fluorée mais présente, de manière surprenante, des performances proches de celles des smectites pontées fluorées, et en tout cas supérieures aux valeurs obtenues par combinaison linéaire des valeurs correspondant aux deux smectites.

**Revendications**

1. Catalyseur comprenant (a) un support, (b) une matrice amorphe et (c) au moins un métal ou un composé de métal choisi parmi les métaux du groupe VIII de la classification périodique des éléments ou une association comprenant un métal ou un composé de métal choisi parmi les métaux du groupe VI B et au moins un métal ou composé de métal choisi parmi les métaux non nobles du groupe VIII ledit catalyseur étant caractérisé en ce que:
- le support contient au moins 20 % en poids d'une argile pontée fluorée appartenant au groupe des smectites,
- la matrice amorphe contient au moins 10 % en poids d'alumine,
- une concentration par rapport au catalyseur final, en métal ou metaux du groupe VIII, exprimée en oxyde(s) de ce ou ces métaux de 0,01 à 5 % en poids dans le cas des métaux nobles dudit groupe VIII et de 0,01 à 20 % en poids dans le cas des métaux non nobles dudit groupe VIII ou une concentration totale en métaux des groupes VIII et VI B de 5 à 40 % en poids dans le cas de l'association d'au moins un métal non noble du groupe VIII avec au moins un métal du groupe VI B,
- une quantité suffisante de support pour que la teneur en argile pontée fluorée soit d'au moins 12 % en poids du catalyseur final,
- une quantité de matrice telle qu'elle forme le complément à 100 % en poids du catalyseur.

2. Catalyseur selon la revendication 1, caractérisé en ce que le support est constitué d'un mélange en poids de 0 à 80 % en poids d'une argile pontée non-fluorée associée à 20 à 100 % en poids d'une argile pontée fluorée.

3. Catalyseur selon la revendication 2, dans lequel le mélange est constitué de 5 à 50 % d'argile pontée non fluorée et de 50 à 95 % en poids d'argile pontée fluorée.

4. Catalyseur selon l'une des revendications 1 à 3, caractérisé en ce que l'argile pontée fluorée contenu dans le support présente une surface spécifique de 200 à 600 $m^2xg^{-1}$, une densité de charge de 0,6 à 1,8 $meq.g^{-1}$, un espacement basal de 1,6 à 2,0 nm et une teneur en fluor de 0,01 à 4 % en poids.

5. Catalyseur selon l'une des revendications 1 à 4, caractérisé en ce que les ponts permettant de maintenir l'espacement basal entre les feuillets de l'argile pontée sont constitués d'alumine.

6. Catalyseur selon l'une des revendications 1 à 5, caractérisé en ce que la matrice amorphe contient au moins 30 % en poids d'alumine.

7. Catalyseur selon l'une des revendications 1 à 6, caractérisé en ce que la matrice amorphe est constitué par un mélange silice-alumine contenant au moins 40 % en poids d'alumine.

8. Catalyseur selon l'une des revendications 1 à 7, caractérisé en ce qu'il contient au moins un métal ou composé de métal choisi dans le groupe formé par le molybdène et le tungstène et au moins un métal ou composé de métal choisi dans le groupe formé par le cobalt et le nickel, la teneur en métaux dans le catalyseur, comptée en oxyde, étant de 10 à 30 % en poids.

9. Utilisation d'un catalyseur selon l'une des revendications 1 à 8, pour l'hydroraffinage d'huiles, de façon à améliorer leur viscosité, sous une pression comprise entre environ 4 et environ 25 MPa, une température comprise entre environ 300°C et environ 500°C, une vitesse d'alimentation comprise entre environ 0,2 et environ 2 litres par litre de catalyseur et par heure et un rapport hydrogène sur hydrocarbures compris entre environ 250 et environ 1500 $lxl^{-1}$.

10. Procédé d'hydrocraquage de charges pétrolières lourdes en distillats moyens, kérosène et gazoles légers comportant au moins une zone de réaction contenant au moims deux catalyseurs différents l'un de l'autre, le dernier catalyseur traversé par la charge étant défini selon l'une des revendications 1 à 8, et étant utilisé sous une pression comprise entre environ 3 et environ 10 MPa, à une température comprise entre environ 360°C et environ 450°C, une vitesse d'alimentation comprise entre environ 0,3 et environ 1,5 litre par litre de catalyseur et par heure et un rapport hydrogène sur hydrocarbure compris entre environ 250 et environ 1000 $lxl^{-1}$.

**Patentansprüche**

1. Katalysator, enthaltend (a) einen Träger, (b) eine amorphe Matrix und (c) zumindest ein Metall oder eine Metallverbindung aus den Metallen der Gruppe VIII des periodischen Systems der Elemente oder eine Kombination, die ein Metall oder eine Metallverbindung aus den Metallen der Gruppe VI B und zumindest ein Metall oder eine Metallverbindung aus den Nicht-Edelmetallen der Gruppe VIII enthält, wobei dieser Katalysator dadurch gekennzeichnet ist, daß:

- der Träger zumindest 20 Gew.-% eines fluorierten Tons mit Blattstruktur, der zur Gruppe der Smectite gehört, enthält,
- die amorphe Matrize zumindest 10 Gew.-% Aluminiumoxid enthält,
- eine Konzentration, bezogen auf Endkatalysator, an Metall oder Metallen der Gruppe VIII, ausgedrückt als Oxid des Metalls oder der Metalle von 0,01 bis 5 Gew.-% im Falle der Edelmetalle der Gruppe VIII und von 0,01 bis 20 Gew.-% im Falle der Nicht-Edelmetalle der Gruppe VIII oder eine Gesamtkonzentration an Metallen der Gruppen VIII und VI B von 5 bis 40 Gew.-% im Falle der Kombination von zumindest einem Nicht-Edelmetall der Gruppe VIII mit zumindest einem Metall der Gruppe VI B,
- eine ausreichende Menge an Träger, daß der Gehalt an fluoriertem Ton mit Blattstruktur zumindest 12 Gew.-% des Endkatalysators beträgt, sowie
- eine solche Menge an Matrix, daß sie den Rest zu 100 Gew.-% des Katalysators bildet.

2. Katalysator nach Anspruch 1, dadurch gekennzeichnet, daß der Träger aus einer Mischung, ausgedrückt durch das Gewicht, von 0 bis 80 Gew.-% eines nicht fluorierten Tons mit Blattstruktur, kombiniert mit 20 bis 100 Gew.-% eines fluorierten Tons mit Blattstruktur besteht.

3. Katalysator nach Anspruch 2, dadurch gekennzeichnet, daß die Mischung aus 5 bis 50 % nicht fluoriertem Ton mit Blattstruktur und 50 bis 95 Gew.-% des fluorierten Tons mit Blattstruktur besteht.

4. Katalysator nach einem der Ansprüche 1 bis 3, dadurch gekennzeichnet, daß der fluorierte Ton mit Blattstruktur, der im Träger enthalten ist, eine spezifische Oberfläche von 200 bis 600 $m^2xg^{-1}$, eine Beladungsdichte von 0,6 bis 1,8 $meq.g^{-1}$, einen Basisabstand von 1,6 bis 2,0 nm und einen Fluorgehalt von 0,01 bis 4 Gew.-% aufweist.

5. Katalysator nach einem der Ansprüche 1 bis 4, dadurch gekennzeichnet, daß die Brücken, welche die Aufrechterhaltung des Basisabstandes zwischen den Blättern des Tons mit Blättchenstruktur ermöglichen, aus Aluminiumoxid bestehen.

6. Katalysator nach einem der Ansprüche 1 bis 5, dadurch gekennzeichnet, daß die amorphe Matrix zumindest 30 Gew.-% Aluminiumoxid enthält.

7. Katalysator nach einem der Ansprüche 1 bis 6, dadurch gekennzeichnet, daß die amorphe Matrix aus einem Gemisch Siliziumdioxid-Aluminiumoxid besteht, das zumindest 40 % Aluminiumoxid enthält.

8. Katalysator nach einem der Ansprüche 1 bis 7, dadurch gekennzeichnet, daß er zumindest ein Metall oder eine Metallverbindung aus der Gruppe Molybdän und Wolfram und zumindest ein Metall oder eine Metallverbindung aus der Gruppe Kobalt und Nickel enthält, wobei der Gehalt an Metallen im Katalysator, ausgedrückt als Oxid, 10 bis 30 Gew.-% beträgt.

9. Verwendung eines Katalysators nach einem der Ansprüche 1 bis 8 zur raffinierenden Hydrierung von Ölen zur Verbesserung ihrer Viskosität bei einem Druck zwischen etwa 4 und etwa 25 MPa, einer Temperatur zwischen etwa 300°C und etwa 500°C, einer Durchsatzgeschwindigkeit zwischen etwa 0,2 und etwa 2 Liter pro Liter Katalysator und pro Stunde und einem Verhältnis Wasserstoff zu Kohlenwasserstoffen zwischen etwa 250 und etwa 1500 $LxL^{-1}$.

10. Verfahren zur Hydrocrackung von Schwerölfraktionen zu Mitteldestillaten, Kerosin und leichten Gasölen, umfassend zumindest eine Reaktionszone, die zumindest zwei voneinander verschiedene Katalysatoren enthält, wobei der letzte Katalysator, den die Fraktion durchläuft, ein solcher gemäß einem der Ansprüche 1 bis 8 ist und bei einem Druck zwischen etwa 3 und etwa 10 MPa, einer Temperatur zwischen etwa 360°C und etwa 450°C, einer Durchsatzgeschwindigkeit zwischen etwa 0,3 und etwa 1,5 Liter pro Liter Katalysator und pro Stunde und einem Verhältnis Wasserstoff zu Kohlenwasserstoff zwischen etwa 250 und etwa 1000 $lxl^{-1}$ angewandt wird.

## Claims

1. A catalyst containing (a) a carrier, (b) an amorphous matrix and (c) at least one metal or compound of a metal selected from the group VIII metals of the periodic classification of elements or an association comprising a metal or compound of metal selected from group VI B metals and at least one metal or compound of metal selected from non noble metals from group VIII, said catalyst being characterized in that:

- the carrier contains at least 20 % by weight of a fluorinated bridged clay pertaining to the smectites group,
- the amorphous matrix contains at least 10 % by weight of alumina,
- the concentration of group VIII metal or metals expressed as oxide(s) thereof, with respect to the final catalyst ranges from 0.01 to 5 % by weight for group VIII noble metals and from 0.01 to 20 % by weight for group VIII non noble metals or the total concentration of groups VIII and VI B metals ranges from 5 to 40 % by weight when using the association of at least one group VIII non noble metal with at least one group VI B metal,
- the carrier amount is sufficient to obtain a content of fluorinated bridged clay of at least 12 % by weight of the final catalyst,
- the matrix amount corresponds to the complement to 100 % by weight of the catalyst.

2. A catalyst according to claim 1, characterized in that the carrier consists of a mixture of 0 - 80 % by weight of a non fluorinated bridged clay associated with 20 - 100 % by weight of fluorinated bridged clay.

3. A catalyst according to claim 2, wherein the mixture consists of 5 - 50 % of non fluorinated bridged clay and 50 - 95 % of fluorinated bridged clay by weight.

4. A catalyst according to one of claims 1 to 3, characterized in that the fluorinated bridged clay contained in the carrier has a specific surface from 200 to 600 $m^2.g^{-1}$, a charge density from 0.6 to 1.8 $meq.g^{-1}$, a basal spacing from 1.6 to 2.0 nm and a fluorine content from 0.01 to 4 % by weight.

5. A catalyst according to one of claims 1 to 4, characterized in that the bridges whereby is maintained the basal spacing between the bridged clay leaves consist of alumina.

6. A catalyst according to one of claims 1 to 5, characterized in that the amorphous matrix contains at least 30 % by weight of alumina.

7. A catalyst according to one of claims 1 to 6, characterized in that the amorphous matrix consists of a silica-alumina containing at least 40 % by weight of alumina.

8. A catalyst according to one of claims 1 to 7, characterized in that it contains at least one metal or compound of metal selected from the group consisting of molybdenum and tungsten and at least one metal or compound of metal selected from the group consisting of cobalt and nickel, the catalyst metals content, expressed as oxide, being 10 to 30 % by weight.

9. The use of a catalyst according to one of claims 1 to 8 for hydrorefining oils, so as to improve their viscosity, under a pressure from about 4 to about 25 MPa, at a temperature from about 300 to about 500°C, a feed velocity from about 0.2 to about 2 liters per liter of catalyst and per hour and a hydrogen to hydrocarbons ratio ranging from about 250 to about 1500 l/l.

10. A process for hydrocracking heavy oil charges to middle distillates, kerosene and light gas oils, comprising at least one reaction zone containing at least two different catalysts, the last catalyst wherethrough passes the charge being defined according to one of the claims 1 to 8 and being used at a pressure from about 3 to about 10 MPa, at a temperature from about 360 to about 450°C, with a feed velocity from about 0.3 to about 1.5 liter per liter of catalyst and per hour and with a hydrogen to hydrocarbon ratio from about 250 to about 1000 l/l.